# EUROPÄISCHE PATENTSCHRIFT

(11) **EP 1 704 334 B1**
(45) Veröffentlichungstag und Bekanntmachung des Hinweises auf die Patenterteilung: **02.01.2008**
(21) Anmeldenummer: 05706671.4
(22) Anmeldetag: 12.01.2005
(51) Int. Cl.: F16B 33/00, F16B 35/04, F16B 35/06, F16B 37/04

(54) **VERDREH- UND AUSPRESSSICHER IN EIN BLECH EINPRESSBARER BOLZEN**
BOLT THAT CAN BE PRESSED INTO A METAL SHEET IN A TORSION-PROOF AND EJECTION-PROOF MANNER
BOULON SECURISE CONTRE LA TORSION ET L'EXTRACTION POUR L'INSERTION DANS LA TOLE

(30) Priorität: 13.01.2004 DE 202004000463
(43) Veröffentlichungstag der Anmeldung: 27.09.2006
(73) Patentinhaber: Acument GmbH & Co. OHG, 56567 Neuwied (DE)
(72) Erfinder: SCHRAER, Thorsten, 32657 Lemgo (DE)
(74) Vertreter: Beck, Alexander
(86) Internationale Anmeldenummer: PCT/DE2005/000032
(87) Internationale Veröffentlichungsnummer: WO 2005/068855

(56) Entgegenhaltungen:
- DE-U1- 20 012 097
- US-A- 2 326 455
- US-A- 2 933 006

## Beschreibung

Die vorliegende Erfindung betrifft einen verdreh- und auspresssicher in ein Blech einpressbaren Bolzen gemäß DE-Gbm 200 12 097 U1.

Da es bei dem Setzen von Bolzen gemäß dieser Entgegenhaltung zwar zu einem Fließen des Werkstoffes des Bleches kommt, die Abdichtung aber nur aus einer Stahl-Stahlwerkstoffpaarung besteht, ist die Verbindungsstelle zwischen Bolzen und Blech gemäß dem Stand der Technik nicht sicher flüssigkeits- oder gar gasdicht.

Aufgabe der vorliegenden Erfindung ist es daher, einen solchen Bolzen so weiter zu entwickeln, dass er flüssigkeits- und gasdicht sitzt, wenn er verarbeitet worden ist.

Auf diese Weise kann erfindungsgemäß erstmals ein solcher einpressbarer Bolzen in Anwendungen verwendet werden, wo es darauf ankommt, dass der Bolzen nach dem Einsetzen absolut flüssigkeits- und gasdruckdicht ist.

Bisher konnten hierzu nur handelsübliche Schrauben verwendet werden, die dann aber aufwändig einzeln verschweißt werden mussten, wobei auch bei der Verschweißung ein erheblicher Kontrollaufwand erforderlich war, damit die Verschweißung stets gasdicht war. Dadurch war dieses Verfahren sehr kompliziert und kostenintensiv. Erfindungsgemäß kann dieses Verfahren viel einfacher durch Einpressen eines erfindungsgemäßen Bolzens ausgeführt werden.

Die vorliegende Aufgabe wird daher mittels eines Bolzens gemäß dem Oberbegriff des beiliegenden Patentanspruchs 1 gelöst, bei dem die dem Blech zugewandte Seite des Kopfes ganz oder teilweise mit einer gummielastischen Dichtungsmasse versehen ist.

Bevorzugte Ausführungsformen ergeben sich aus den beiliegenden Unteransprüchen, insbesondere ist es bevorzugt, dass die Stege selbst frei von Dichtungsmasse sind, da auf diese Weise eine Verringerung der Verdreh- und Auspresssicherheit des Bolzens durch die Beschichtung mit der Dichtungsmasse verhindert wird.

Ebenso kann dies verhindert werden, indem die Dichtungsmasse ausschließlich im Bereich der dem Blech zugewandten Außenkante des Kopfes angebracht ist.

Ebenso kann dieses weitere Problem dadurch gelöst werden, dass die Dichtungsmasse ausschließlich in einer kreisringförmigen Nut im Kopf angebracht ist, die außerhalb der radialen Erstreckung der Stege, aber innerhalb der dem Blech zugewandten Außenkante des Kopfes verläuft.

Die vorliegende Erfindung wird im Folgenden an Hand der in den beigefügten Zeichnungen dargestellten Ausführungsbeispiele näher erläutert. Es zeigt:
**FIGUR 1** einen erfindungsgemäßen Bolzen mit Beschichtung des ganzen Kopfes außer den Stegen, in Schnittdarstellung von der Seite;
**FIGUR 2** den Kopf des Bolzens der Figur 1 von unten;
**FIGUR 3** einen erfindungsgemäßen Bolzen mit Dichtungsmasse im Bereich der Außenkante des Kopfes in Schnittdarstellung von der Seite;
**FIGUR 4** den Kopf des Bolzens gemäß Figur 3 von unten;
**FIGUR 5** einen weiteren erfindungsgemäßen Bolzen in Schnittdarstellung von der Seite; und
**FIGUR 6** den Kopf des Bolzens gemäß Figur 5 von unten.

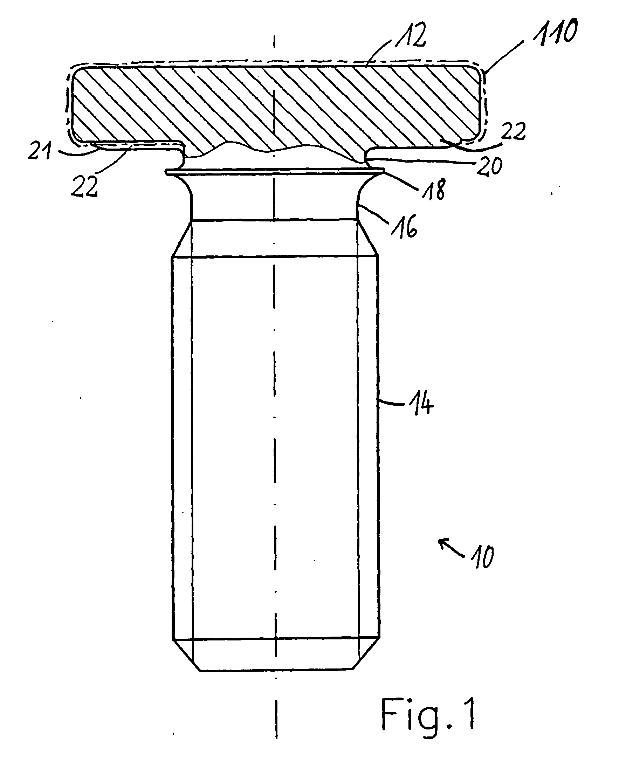

Wie in Figur 1 dargestellt, besteht ein erfindungsgemäßer Bolzen 10 aus einem scheibenförmigen Kopf 12 und einem daran anschließenden zylinderförmigen Gewindeträger 14, der mit einem Außengewinde versehen ist.

Zwischen dem Gewinde und dem Kopf 12 sind in dieser Reihenfolge ein Kalibrierbund 16, ein ringförmiger Vorsprung 18 und eine ringförmige Nut 20 mit etwa halbkreisförmigem Querschnitt angeordnet. Auf der Unterseite des Kopfes 12, die beim Setzen des Befestigungselementes dem Blech zugewandt ist, sind radial verlaufende Stege 22 angeordnet, die eine im radialen Verlauf im wesentlichen gleich bleibende Höhe aufweisen und lediglich im radialen Außenbereich 21 abgeflacht sind.

Der Kopf 12 ist teilweise geschnitten dargestellt, wobei auf der rechten Seite der entsprechende Steg 22 ebenfalls geschnitten dargestellt ist, während der entsprechende Steg 22 auf der linken Seite nicht geschnitten dargestellt ist.

Erfindungsgemäß wird ein solcher Bolzen durch Beschichten des Kopfes mit einer gummielastischen Dichtungsmasse flüssigkeits- und gasdicht in ein Blech einsetzbar. Die Beschichtung kann in der einfachsten Weise durch Tauchen geschehen, dabei kann sich die entsprechende Beschichtung bis zum Kalibrierbund 16 erstrecken. Als Beschichtungsmaterial dient in diesem Falle vorzugsweise Epoxidharz, beispielsweise das Produkt Rimlex® der ANOCHROME-Group, Großbritannien, welches flüssig aufgetragen werden kann und dann eine feste, elastische Dichtungsmasse ergibt. In einem solchen Fall kann jedoch die Verdreh- und Auspresssicherheit des Bolzens etwas leiden. Die in Figur 1 dargestellte Beschichtung 110 erstreckt sich daher nur auf den Kopf 12 selbst, wobei jedoch die Stege 22 von der Beschichtung freigehalten sind. Dies ist zwar etwas aufwändiger herzustellen, als die oben beschriebene ganz einfache erfindungsgemäße Lösung, erlaubt jedoch dafür höhere mechanische Belastungswerte für den gesetzten Bolzen.

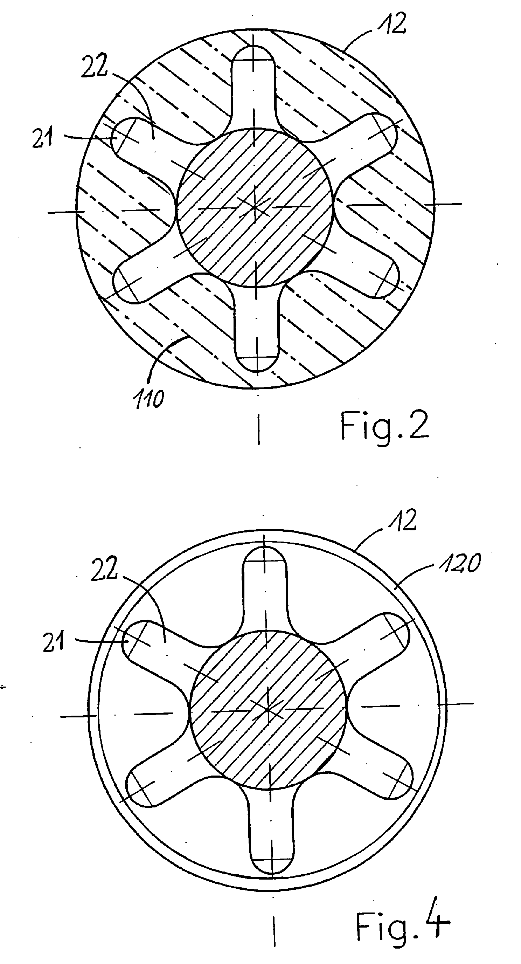

Figur 2 zeigt den Kopf 12 des Bolzens der Figur 1 von unten. An Hand der unterbrochenen Schraffuren ist der von unten sichtbare, mit der Dichtungsmasse 110 versehene Bereich des Kopfes 12 deutlich zu erkennen. Ebenso deutlich ist erkennbar, dass die Stege 22 einschließlich der Abschrägungen 21 nicht mit der gummielastischen Dichtungsmasse überzogen sind.

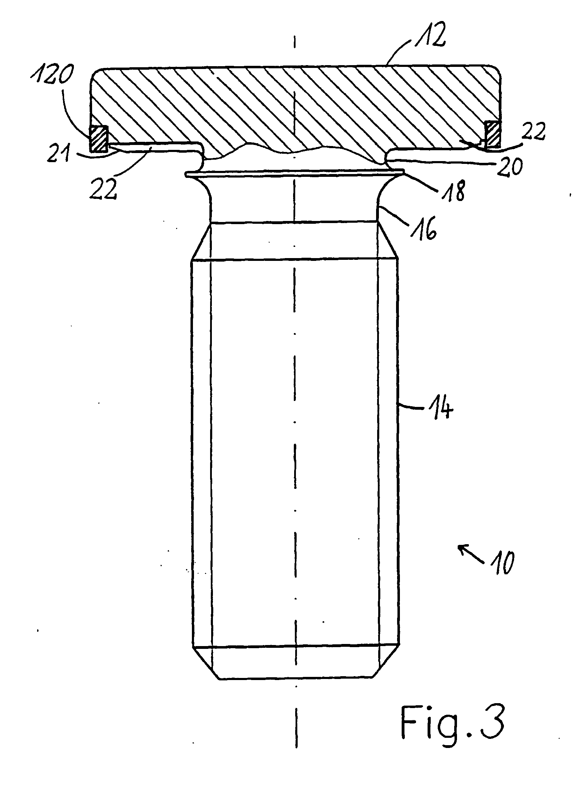

Figur 3 stellt eine weitere Ausführungsform des erfindungsgemäßen Bolzens dar. Gleiche Bezugszeichen kennzeichnen dabei gleiche Bestandteile, wie in Figuren 1 und 2, die entsprechende Beschreibung wird daher hier nicht nochmals wiederholt.

Bei dem Bolzen gemäß Figur 3 ist erfindungsgemäß im Bereich der dem Blech zugewandten Außenkante des Kopfes 12 eine umlaufende Aussparung vorgesehen, die mit der gummielastischen Dichtungsmasse 120 gefüllt ist. Alternativ kann ein entsprechender Dichtungsring aus Polyurethan, Polyamid, Polytetrafluoräthylen oder Polyolefinen in die Aussparung eingesetzt werden. Diese Lösung hat den Vorteil, dass die mechanischen Eigenschaften des gesetzten Bolzens durch die Dichtungsmasse überhaupt nicht beeinflusst werden können.

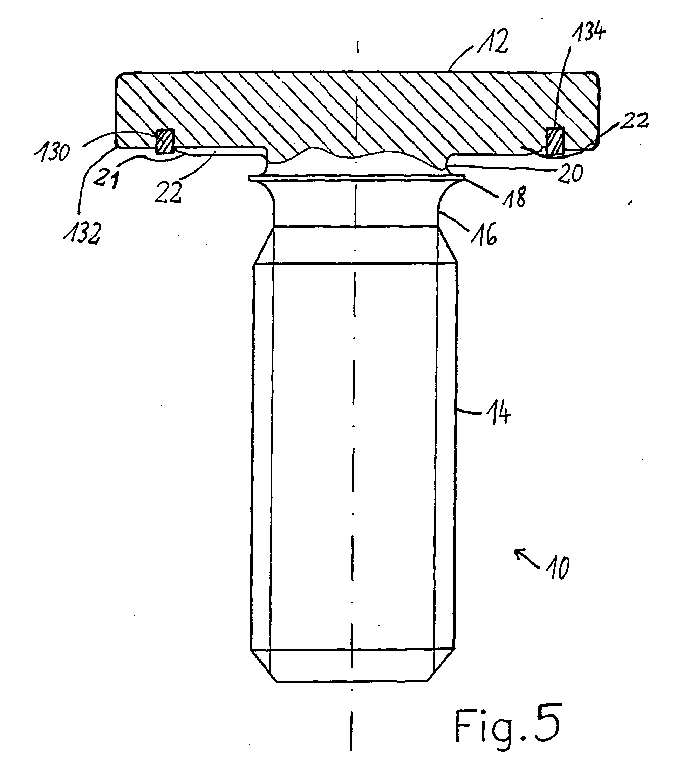

Figur 4 zeigt den Kopf des Bolzens der Figur 3 von unten, wobei die Anordnung des Ringes 120 aus der gummielastischen Dichtungsmasse nochmals deutlich erkennbar ist.

Figur 5 zeigt eine weitere erfindungsgemäße Ausführungsform des Bolzens. Hierbei ist der Kopf 12 mit einem etwas größeren Durchmesser ausgeführt, und radial außerhalb der Stege 22 ist eine kreisringförmige Nut 134 im Kopf 12 angeordnet, die sich somit innerhalb der dem Blech zugewandten Außenkante 132 des Kopfes 12 erstreckt. Diese Nut 134 ist mit der Dichtungsmasse 130 gefüllt oder ein entsprechender Dichtungsring aus Polyurethan, Polyamid, Polytetrafluoräthylen oder Polyolefinen ist in die Nut 134 eingesetzt.

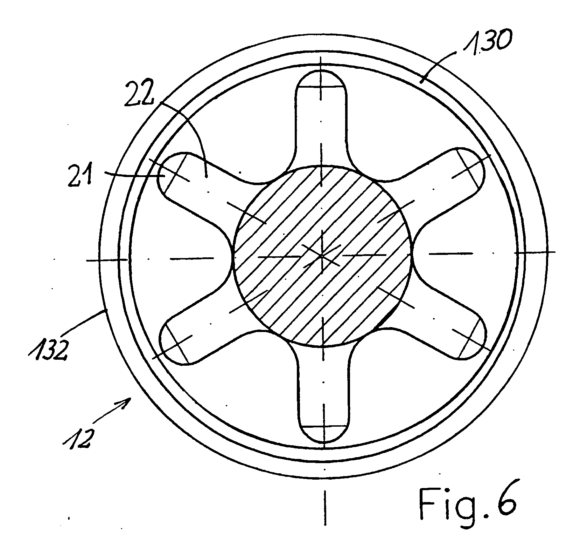

Figur 6 zeigt den Kopf des Bolzens der Figur 5 von unten. Dabei wird erneut der Verlauf der kreisringförmigen Nut 134 deutlich.

Als gummielastische Dichtungsmasse 110; 120; 130 dient dabei vorzugsweise beim Überziehen des Kopfes Epoxidharz, bei den Lösungen gemäß Figur 3 oder 5 vorzugsweise Polyurethan, Polyamid, Polytetrafluoräthylen oder ein Gemisch aus Polyolefinen.

## Patentansprüche

1. Verdreh- und auspresssicher in ein Blech einpressbarer Bolzen (10) mit einem Kopf (12), dessen nach dem Einsetzen dem Blech zugewandte Seite radial angeordnete Stege (22) aufweist, die sich beim Einsetzen in das Blech eindrücken und in dessen Mitte ein zylindrischer Gewindeträger (14) angeordnet ist, der durch das Blech hindurch und auf der anderen Seite des Bleches heraus ragt, und der in der Nähe der im gesetzten Zustand dem Blech zugewandten Seite des Kopfes (12) eine umlaufende Ringausnehmung (20) aufweist, in die das beim Setzen verdrängte Blechmaterial eingepresst werden kann, **dadurch gekennzeichnet, dass** die dem Blech zugewandte Seite des Kopfes (12) ganz oder teilweise mit einer gummielastischen Dichtungsmasse (110; 120; 130) versehen ist.

2. Bolzen nach Anspruch 1, **dadurch gekennzeichnet, dass** die Stege (22) einen im wesentlichen rechteckigen Querschnitt aufweisen und ihre Seitenwände (24) senkrecht auf der dem Blech zugewandten Seite des Kopfes (12) stehen.

3. Bolzen nach Anspruch 1 oder 2, **dadurch gekennzeichnet, dass** die Stege (22) im radialen Außenbereich (21) flach auslaufen.

4. Bolzen nach einem der Ansprüche 1 bis 3, **dadurch gekennzeichnet, dass** die Stege (22) im radialen Außenbereich (21) seitlich abgerundet auslaufen.

5. Bolzen nach einem der Ansprüche 1 bis 4, **dadurch gekennzeichnet, dass** er in Bleche mit Lochungen ohne besondere zusätzliche Formen, wie Halskragen oder Sonstiges, eingepresst werden kann.

6. Bolzen nach einem der Ansprüche 1 bis 5, **dadurch gekennzeichnet, dass** lediglich der Bereich außerhalb der Stege (22) mit der gummielastischen Dichtungsmasse (110) versehen ist, während die Stege (22) selbst frei von Dichtungsmasse (110) sind.

7. Bolzen nach einem der Ansprüche 1 bis 5, **dadurch gekennzeichnet, dass** die Dichtungsmasse (120) ausschließlich im Bereich der dem Blech zugewandten Außenkante des Kopfes (12) angebracht ist.

8. Bolzen nach einem der Ansprüche 1 bis 5, **dadurch gekennzeichnet, dass** die Dichtungsmasse (130) ausschließlich in einer kreisringförmigen Nut (134) im Kopf (12) angebracht ist, die außerhalb der radialen Erstreckung der Stege (22), aber innerhalb der dem Blech zugewandten Außenkante (132) des Kopfes (12) verläuft.

9. Bolzen nach einem der vorhergehenden Ansprüche, **dadurch gekennzeichnet, dass** die Dichtungsmasse (110; 120; 130) aus Polyurethan, Polyamid, Polyolefinen, Polytetrafluoräthylen oder Epoxidharz besteht.

## Claims

1. Bolt (10) that can be pressed into a metal sheet in a torsion-proof and ejection-proof manner having a head (12) the side of which facing the metal sheet in the set state is having radially extending webs (22) which during the setting are impressed into the metal sheet, wherein in the centre of the head a cylindrical winding support (14) is positioned which is extending through the metal sheet and protrudes on the other side thereof and which is having in vicinity of the side of the head (12) facing the metal sheet a circumferential annular groove (20) into which the sheet metal material that is displaced during the setting process can be pressed, **characterised in that** the side of the head (12) facing the metal sheet completely or partly is provided with a rubber-elastic sealing material (110; 120; 130).

2. Bolt according to claim 1, **characterised in that** the webs (22) basically are having a rectangular cross-section with their side walls (24) extending perpendicular to the side of the head (12) facing the metal sheet.

3. Bolt according to claim 1 or 2, **characterised in that** the webs (22) in their radially exterior region are tapering off flatly.

4. Bolt according to any of the claims 1 to 3, **characterised in that** the webs (22) in their radially exterior region (21) are tapering off laterally rounded.

5. Bolt according to any of the claims 1 to 4, **characterised in that** it can be pressed into metal sheets with holes without special additional shapes as collars or the like.

6. Bolt according to any of the claims 1 to 5, **characterised in that** merely the area outwardly of the webs (22) are provided with the rubber-elastic sealing material (110) while the webs (22) themselves are free from the sealing material (110).

7. Bolt according to any of the claims 1 to 5, **characterised in that** the sealing material (120) exclusively is provided in the region of the outer edge of the head (12) facing the metal sheet.

8. Bolt according to any of the claims 1 to 5, **characterised in that** the sealing material (130) exclusively is provided in an annular groove (134) in the head (12) which is positioned outwardly of the radial extension of the webs (22) but within the outer edge (132) of the head (12) facing the metal sheet.

9. Bolt according to any of the preceding claims, **characterised in that** the sealing material (110; 120; 130) is consisting of polyurethane, polyamide, polyolefins, polytetrafluorethylene or epoxy resin.

## Revendications

1. Boulon (10) pouvant être enfoncé dans une tôle de manière sécurisée contre la torsion et l'extraction avec une tête (12) dont le côté tourné vers la tôle après la mise en place comporte des nervures (22) disposées radialement qui s'impriment dans la tôle lors de la mise en place et au milieu de laquelle est disposé un porte-filet (14) cylindrique qui traverse la tôle et fait saillie de l'autre côté de la tôle, et qui comporte à proximité du côté de la tête (12) tourné vers la tôle à l'état mis en place un évidement annulaire (20) périphérique dans lequel peut être enfoncée la matière de la tôle déplacée lors de la mise en place, **caractérisé en ce que** le côté de la tête (12) tourné vers la tôle est muni en totalité ou en partie d'un matériau d'étanchéité à élasticité caoutchoutique (110 ; 120; 130).

2. Boulon selon la revendication 1, **caractérisé en ce que** les nervures (22) comportent une section droite sensiblement rectangulaire et leurs parois latérales (24) sont situées perpendiculairement sur le côté de la tête (12) tourné vers la tôle.

3. Boulon selon la revendication 1 ou 2, **caractérisé en ce que** les nervures (22) s'étendent de manière aplatie dans le domaine externe radial (21).

4. Boulon selon l'une des revendications 1 à 3, **caractérisé en ce que** les nervures (22) s'étendent de manière latéralement arrondie dans le domaine externe radial (21).

5. Boulon selon l'une des revendications 1 à 4, **caractérisé en ce qu'**il peut être enfoncé dans des tôles comportant des perforations sans formes supplémentaires particulières, comme des collets ou analogues.

6. Boulon selon l'une des revendications 1 à 5, **caractérisé en ce que** seul le domaine à l'extérieur des nervures (22) est muni du matériau d'étanchéité à élasticité caoutchoutique (110) tandis que les nervures (22) elles-mêmes sont dépourvues de matériau d'étanchéité (110).

7. Boulon selon l'une des revendications 1 à 5, **caractérisé en ce que** le matériau d'étanchéité (120) est disposé exclusivement dans le domaine du bord externe de la tête (12) tourné vers la tôle.

8. Boulon selon l'une des revendications 1 à 5, **caractérisé en ce que** le matériau d'étanchéité (130) est disposé exclusivement dans une rainure circulaire (134) dans la tête (12) qui s'étend à l'extérieur de l'étendue radiale des nervures (22) mais à l'intérieur du bord externe (132) de la tête (12) tourné vers la tôle.

9. Boulon selon l'une des revendications précédentes, **caractérisé en ce que** le matériau d'étanchéité (110 ; 120 ; 130) consiste en polyuréthane, polyamide, polyoléfines, polytétrafluoroéthylène ou résine époxyde.
